(19)

Europäisches
Patentamt
European
Patent Office
Office européen
des brevets

(11) **EP 4 502 951 A1**

(12) **EUROPEAN PATENT APPLICATION**

(43) Date of publication:
**05.02.2025 Bulletin 2025/06**

(21) Application number: **24192329.1**

(22) Date of filing: **01.08.2024**

(51) International Patent Classification (IPC):
**G06T 7/80** (2017.01)

(52) Cooperative Patent Classification (CPC):
**G06T 7/80; G06T 2207/10016; G06T 2207/30252**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.08.2023 CN 202310962125**

(71) Applicant: **Beijing Horizon Information Technology Co., Ltd.**
**Beijing 100094 (CN)**

(72) Inventors:
• **ZHANG, Xin**
**Beijing, 100094 (CN)**
• **ZHAO, Zeyang**
**Beijing, 100094 (CN)**
• **YANG, Degang**
**Beijing, 100094 (CN)**
• **XU, Binfeng**
**Beijing, 100094 (CN)**

(74) Representative: **Kolster Oy Ab**
**Salmisaarenaukio 1**
**P.O. Box 204**
**00181 Helsinki (FI)**

(54) **MULTI-CAMERA EXTRINSIC PARAMETER CALIBRATION METHOD AND DEVICE, STORAGE MEDIUM AND ELECTRONIC APPARATUS**

(57)    A multi-camera extrinsic parameter calibration method and device, storage medium and an electronic apparatus are disclosed. The method includes: acquiring multi-frame environmental images from different view angles collected by a plurality of cameras provided at different orientations of a movable device; performing detection of a predetermined type of object respectively on the multi-frame environmental images to obtain initial detection information respectively corresponding to the multi-frame environmental images; mapping the initial detection information to a pre-set coordinate system to obtain corresponding transformed detection information; dividing the plurality of cameras into at least one camera group based on the spatial layout of the plurality of cameras; constructing, for each camera group, cross-image matching information of a predetermined type of object based on the transformed detection information respectively corresponding to each camera included in the camera group; and performing extrinsic parameter calibration on the plurality of cameras based on the cross-image matching information.

FIG.2

EP 4 502 951 A1

**Description**

**FIELD OF THE PRESENT DISCLOSURE**

The present disclosure relates to the machine vision technology, and more particularly, to a multi-camera extrinsic parameter calibration method and device, a storage medium and an electronic apparatus.

**BACKGROUND OF THE PRESENT DISCLOSURE**

A plurality of cameras are often provided on a movable device such as a vehicle. Generally, factors such as installation position movement, vibration, tire pressure change, and collision may cause slight changes in the positions of the cameras, resulting in changes in the extrinsic parameters of the cameras.

**SUMMARY OF THE PRESENT DISCLOSURE**

In order to perform extrinsic parameter calibration on a plurality of cameras during the movement of the movable device, the present disclosure is proposed. According to the embodiments of the present disclosure, there are provided a multi-camera extrinsic parameter calibration method and device, a storage medium and an electronic apparatus.

According to an aspect of an embodiment of the present disclosure, there is provided a multi-camera extrinsic parameter calibration method, comprising:

acquiring multi-frame environmental images from different view angles collected by a plurality of cameras provided at different orientations of a movable device;

performing detection of a predetermined type of object respectively on the multi-frame environmental images to obtain initial detection information respectively corresponding to the multi-frame environmental images;

mapping the initial detection information respectively corresponding to the multi-frame environmental images to a pre-set coordinate system corresponding to the movable device to obtain transformed detection information respectively corresponding to the multi-frame environmental images;

dividing the plurality of cameras into at least one camera group based on the spatial layout of the plurality of cameras;

constructing, for each camera group of the at least one camera group, cross-image matching information of a predetermined type of object based on the transformed detection information respectively corresponding to each camera included in the camera group; and

performing extrinsic parameter calibration on the plurality of cameras based on the cross-image matching information respectively corresponding to the at least one camera group.

According to another aspect of an embodiment of the present disclosure, there is provided a multi-camera extrinsic parameter calibration device, comprising:

an acquisition module configured for acquiring multi-frame environmental images from different view angles, collected by a plurality of cameras, provided at different orientations of a movable device;

a detection module configured for performing detection of a predetermined type of object respectively on the multi-frame environmental images acquired by the acquisition module to obtain initial detection information respectively corresponding to the multi-frame environmental images;

a mapping module configured for mapping the initial detection information respectively corresponding to the multi-frame environmental images obtained by the detection module to a pre-set coordinate system corresponding to the movable device to obtain transformed detection information respectively corresponding to the multi-frame environmental images;

a first determination module configured for dividing the plurality of cameras into at least one camera group based on the spatial layout of the plurality of cameras;

a construction module configured for constructing, for each camera group of the at least one camera group determined by the first determination module, cross-image matching information of a predetermined type of object based on the transformed detection information respectively corresponding to each camera included in the camera group obtained by the mapping module; and

a first calibration module configured for performing extrinsic parameter calibration on the plurality of cameras based on the cross-image matching information respectively corresponding to the at least one camera group constructed by the construction module.

According to still another aspect of an embodiment of the present disclosure, there is provided a computer-readable storage medium storing a computer program thereon for executing the multi-camera extrinsic parameter calibration method described above.

According to yet another aspect of an embodiment of the present disclosure, there is provided an electronic apparatus, comprising:

a processor; and

a memory configured for storing processor-executable instructions;

wherein the processor is configured for reading the executable instructions from the memory, and executing the instructions to implement the multi-camera extrinsic parameter calibration method described above.

According to yet another aspect of an embodiment of the present disclosure, there is provided a computer program product which, when instructions in the computer program product are executed by a processor, performs the multi-camera extrinsic parameter calibration method described above.

Based on the a multi-camera external reference calibration method and device, a storage medium and an electronic apparatus provided in the above-mentioned embodiments of the present disclosure, multi-view image data (comprising multi-frame environmental images of different views) may be collected by a plurality of cameras arranged at different orientations of a movable device, and multiple transformed detection information under the same pre-set coordinate system may be obtained by the detection of the predetermined type of object on the multi-view image data and performing coordinate system transformation on the detection result. In addition, with reference to the spatial layout of the plurality of cameras, the plurality of cameras may be divided into at least one camera group. In combination with the use of a plurality of transformed detection information in a pre-set coordinate system, the same predetermined type of objects located in different environmental images may be able to be matched, so that the obtained cross-image matching information is used for extrinsic parameter calibration of a plurality of cameras. Thus, in the embodiments of the present disclosure, by performing cross-image matching of information in a pre-set coordinate system with reference to information carried by multi-view image data during the movement of movable device, the extrinsic parameter calibration may be performed on a plurality of cameras automatically and reliably in real time, thereby ensuring the performance effect of tasks related to automatic driving.

The embodiments of the present disclosure are described in further detail below with reference to the accompanying drawings and embodiments.

**BRIEF DESCRIPTION OF THE DRAWINGS**

Fig. 1 is a schematic diagram of a scenario to which the present disclosure is applicable.

Fig. 2 is a schematic flow view of a multi-camera extrinsic parameter calibration method provided in an exemplary embodiment of the present disclosure.

Fig. 3 is a schematic view of a lane line in an exemplary embodiment of the present disclosure.

Fig. 4 is a schematic flow view showing a manner in which cross-image matching information is determined in an exemplary embodiment of the present disclosure.

Fig. 5 is a schematic diagram showing a manner in which a point-line matching pair is determined in an exemplary embodiment of the present disclosure.

Fig. 6 is a schematic flow view showing a manner in which initial extrinsic parameters for each of a plurality of cameras are corrected in an exemplary embodiment of the present disclosure.

Fig. 7 is a schematic flow diagram showing a manner in which transformed detection information corresponding to each of a plurality of environmental images is time synchronized in an exemplary embodiment of the present disclosure.

Fig. 8 is a schematic flow diagram showing a manner in which transformed detection information corresponding to each of a plurality of environmental images is time synchronized in another exemplary embodiment of the present disclosure.

Fig. 9 is a schematic flow diagram showing a manner in which a respective target extrinsic parameter is determined for a plurality of cameras in an exemplary embodiment of the disclosure.

Fig. 10 is a schematic flow diagram showing a manner of determining whether corrected extrinsic parameter data meet data characteristics in an exemplary embodiment of the present disclosure.

Fig. 11 is a schematic flow diagram showing a manner of updating initial extrinsic parameters for each of a plurality of cameras in an exemplary embodiment of the present disclosure.

Fig. 12 is a schematic flow view of a multi-camera extrinsic parameter calibration method provided in another exemplary embodiment of the present disclosure.

Fig. 13 is a schematic structure diagram of a multi-camera extrinsic parameter calibration device provided in an exemplary embodiment of the present disclosure.

Fig. 14 is a schematic structure diagram of a construction module in an exemplary embodiment of the present disclosure.

Fig. 15 is a schematic structure diagram of a mapping module and a first calibration module in an exemplary embodiment of the present disclosure.

Fig. 16 is a schematic view of modules involved in time synchronization of transformed detection information corresponding to each of a plurality of environmental images in an exemplary embodiment of the present disclosure.

Fig. 17 is a schematic structure diagram of a time synchronization module in an exemplary embodiment of the present disclosure.

Fig. 18 is a schematic view of modules involved in determining a respective target extrinsic parameter for a plurality of cameras in an exemplary embodiment of the present disclosure.

Fig. 19 is a schematic view of modules involved in determining whether corrected extrinsic parameters meet data characteristics in an exemplary embodiment of the present disclosure.

Fig. 20 is a schematic view of modules involved in updating an initial extrinsic parameter for each of a plurality of cameras in an exemplary embodiment of the present disclosure.

Fig. 21 is a schematic structure diagram of an electronic apparatus provided in an exemplary embodiment of the present disclosure.

## DESCRIPTION OF THE EMBODIMENTS

In order to explain the present disclosure, example embodiments of the present disclosure will be described in detail below with reference to the accompanying drawings. It is apparent that the described embodiments are only a part of the embodiments of the present disclosure, not all of them. It should be understood that the present disclosure is not limited to the exemplary embodiments.

It should be noted that the relative arrangement of parts and steps, numerical expressions and numerical values set forth in these examples do not limit the scope of the disclosure unless specifically stated otherwise.

Application overview

A plurality of camera are often arranged on a movable device such as a vehicle, and some factors may cause a small change in the position of the camera, thus leading to a change in the extrinsic parameter of the camera. The extrinsic parameter of the camera (also referred as "camera extrinsic parameter" hereafter) is a common concept in computer vision and graphics, and the camera extrinsic parameter may be used to describe the position and orientation of a camera in a three-dimensional scene.

Alternatively, the camera extrinsic parameter may be in the following matrix form:

$$\begin{bmatrix} R & t \\ 0 & 1 \end{bmatrix}$$

Wherein, R represents a rotating part in the camera extrinsic parameters, and the shape of R may be 3 * 3, wherein the former 3 in "3 * 3" may represent a width of R, and the latter 3 in "3 * 3" may represent a length of R. That is, R may comprise three rows and three columns, nine elements all together. t represents a translation part in the camera extrinsic parameters, and the shape of t may be 3 * 1, wherein 3 in "3 * 1" may represent a width of t, and 1 in "3 * 1" may represent a length of t. That is to say, t may comprise three rows and one column, three elements all together. In this way, the camera extrinsic parameters may be embodied as a matrix having a shape of 4 * 4.

In implementing the present disclosure, it is found by the inventor that the camera extrinsic parameter may be applied to an automatic driving-related task, such as a target detection task, an object tracking task, etc. The accuracy of the camera extrinsic parameter affects the performance effect of the automatic driving-related task. Therefore, it is necessary to perform extrinsic parameter calibration on a plurality of cameras provided on a movable device in real time during the movement of the movable device to determine accurate camera extrinsic parameters for the plurality of cameras, respectively, thereby ensuring the performance effect of tasks related to automatic driving.

Exemplary system

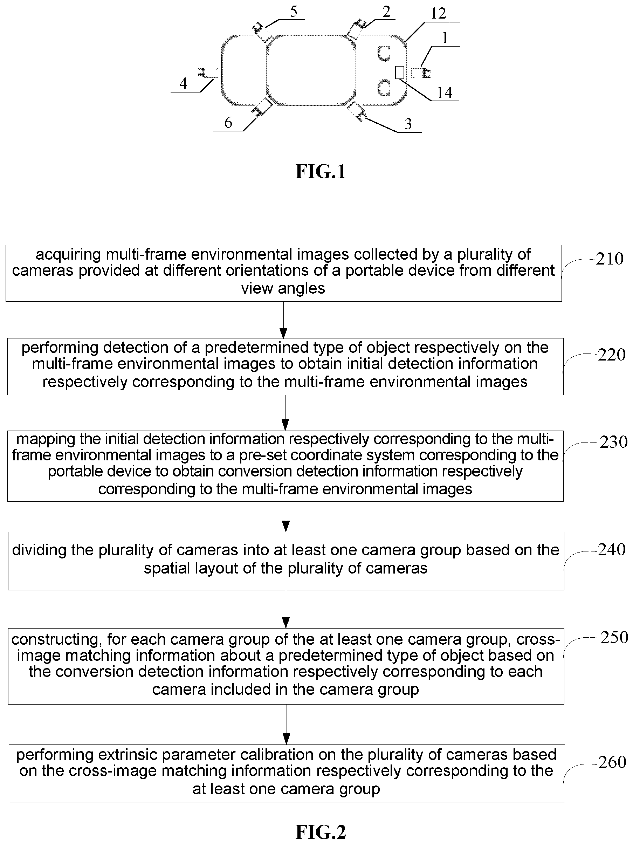

Fig. 1 is a schematic diagram of a scenario to which the present disclosure is applicable. As shown in Fig. 1, there are included a vehicle 12, an electronic apparatus 14, and a plurality of cameras. The electronic apparatus 14 may be provided on the vehicle 12, or the electronic apparatus 14 may not be provided on the vehicle 12, but remotely communicate with the vehicle 12. The plurality of cameras may be positioned at different orientations of the vehicle 12.

In one example, the plurality of cameras may be six cameras, which are a camera 1, a camera 2, a camera 3, a camera 4, a camera 5, and a camera 6 shown in Fig. 1.

During the movement of the vehicle 12, the plurality of cameras may periodically acquire environmental images. The environmental images acquired by each of the plurality of cameras may be provided to the electronic apparatus 14. The electronic apparatus 14 may implement the multi-camera extrinsic parameter calibration method in the embodiment of the present disclosure based on the environmental images provided by the plurality of cameras to realize the extrinsic parameter calibration of the plurality of cameras, thereby ensuring the performance effect of the task related to automatic driving.

Exemplary methods

Fig. 2 is a schematic flow view of a multi-camera extrinsic parameter calibration method provided in an exemplary embodiment of the present disclosure. The method shown in Fig. 2 may include a step 210, a step 220, a step 230, a step 240, a step 250, and step 260, each of which will be described below.

Step 210: acquiring multi-frame environmental images from different view angles collected by a plurality of cameras provided at different orientations of a movable device.

Alternatively, the movable device may include, but are not limited to, a vehicle, a ship, an airplane, and the like, which are not specifically enumerated herein.

Alternatively, a plurality of cameras arranged at different orientations of the movable device may be represented as N cameras, and N may take values of 4, 6, 8, etc., which are not specifically enumerated herein.

During the movement of the movable device, the N cameras may respectively collect the environmental images, and thus N frames of environmental images corresponding to the N cameras on a one-to-one basis may be obtained as the multi-frame environmental images involved in step 210. The respective collection time points of the N frames of environmental images may be the same. That is to say, the N frames of environmental images may be completely aligned in time. Alternatively, there may be slight differences in the respective collection time points of the N frames of environmental images, i.e., the N frames of environmental images may be substantially temporally aligned.

Step 220: performing detection of a predetermined type of object respectively on the multi-frame environmental images to obtain initial detection information respectively corresponding to the multi-frame environmental images.

Alternatively, the predetermined type of object includes, but is not limited to, a lane line, a street lamp holder, etc. It is only necessary to ensure that the predetermined type of object is often present on a road surface, is easy to identify, and has an elongated shape, which will not be enumerated herein. In order to facilitate understanding, the embodiments of the present disclosure will be described by taking a lane line as an example of the predetermined type of object

With regard to each of N frames of environmental images, a semantic segmentation algorithm may be used to perform semantic segmentation on the frame of environmental image so as to determine which pixel points in the frame of environmental image are of a lane line type, and thus a lane line existing in the frame of environmental image may be detected. Herein, the number of lane lines present in the frame of environmental image may be 1, 2 or more. By performing lane line sampling on the frame environmental image, a lane line sampling result may be obtained, and the lane line sampling result may be used as initial detection information corresponding to the frame environmental image.

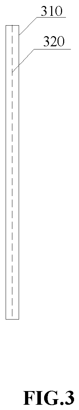

In one example, the number of lane lines present in the frame environmental image is 1, and an elongated rectangle 310 is shown in Fig. 3. The lane line sampling result obtained by lane line sampling the frame environmental image may comprise four corner points of the elongated rectangle 310 or several points on the centerline 320 of the elongated rectangle 310. Assuming that the long dimension of the elongated rectangle 310 is 20 meters, one point may be sampled every 1 meter along the center line 320 to obtain 21 points, which may constitute the lane line sampling result corresponding to the frame of environmental image.

Step 230: mapping the initial detection information respectively corresponding to the multi-frame environmental images to a pre-set coordinate system corresponding to the movable device to obtain transformed detection information respectively corresponding to the multi-frame environmental images.

Alternatively, the movable device may be a vehicle, and the pre-set coordinate system corresponding to the movable device may be a vehicle coordinate system (VCS). Of course, the pre-set coordinate system may be other coordinate systems customized for the movable device, and embodiments of the present disclosure are not limited in this respect.

For each of the N frame environmental images, the initial detection information corresponding to the frame environmental image may be considered as the detection information in the pixel coordinate system of the camera corresponding to the frame environmental image. In step 230, the initial detection information corresponding to the frame environmental image may be mapped from a pixel coordinate system to a pre-set coordinate system to obtain transformed detection information corresponding to the frame of environmental image. Obviously, the difference between the transformed detection information and the initial detection information is mainly in that the coordinate systems assigned are different.

Note that the camera extrinsic parameter or extrinsic parameter involved in the embodiments of the present disclosure may be used to describe the position and orientation of the camera in the VCS coordinate system, and thus the camera extrinsic parameter or extrinsic parameter involved in the embodiments of the present disclosure may also be referred to as a camera-VCS extrinsic parameter.

Step 240: dividing the plurality of cameras into at least one camera group based on the spatial layout of the plurality of cameras.

With reference to the spatial layout of the N cameras, the relative positional relationship of the N cameras may be determined. With reference to the relative positional relationship of the N cameras, the N cameras may be divided into at least one camera group.

Alternatively, the at least one camera group may be represented as M camera groups. Each of the M camera groups may comprise adjacent two of the N cameras. In one example, as shown in Fig. 1, the N cameras are 6 cameras, which are respectively a camera 1, a camera 2, a camera 3, a camera 4, a camera 5 and a camera 6. The camera 1 is arranged directly in front of the movable device. The camera 2 is arranged in front of the left of the movable device. The camera 3 is arranged in front of the right of the movable device. The camera 4 is arranged directly behind the movable device. The camera 5 is arranged behind the left of the movable device. The camera 6 is arranged behind the right of the movable device. Obviously, in terms of the relative positional relationship, the camera 1 and the camera 2 are adjacent to each other. The camera 1 and the camera 3 are adjacent to each other. The camera 4 and the camera 5 are adjacent to each other. The camera 4 and the camera 6 are adjacent to each other. The camera 2 and the camera 5 are adjacent to each other, and the camera 3 and the camera 6 are adjacent to each other. Then the M camera groups obtained by dividing the 6 cameras may be 6 camera groups, which are respectively a camera group comprising a camera 1 and a camera 2, a camera group comprising a camera 1 and a camera 3, a camera group comprising a camera 4 and a camera 5, a camera group comprising a camera 4 and a camera 6, a camera group comprising a camera 2 and a camera 5, and a camera group comprising a camera 3 and a camera 6.

Of course, the execution of step 240 is not limited to this. For example, for any one camera group, two cameras in the camera group may not be adjacent. It is only necessary to ensure that the field of view of the two cameras overlap to be able to capture the same predetermined type object at the same time. For example, for any one camera group, the number of cameras in the camera group is not limited to two. For example, it may also be three. It is only necessary to ensure that the field of view of the three cameras overlap so as to capture the same predetermined type of objects at the same time.

Step 250: constructing, for each camera group of the at least one camera group, cross-image matching information of a predetermined type of object based on the transformed detection information respectively corresponding to each camera included in the camera group.

For any camera group, each camera included in the camera group may simultaneously photograph the same predetermined type of objects. That is, each corresponding transformed detection information of each camera included in the camera group may include detection information of the same predetermined type of objects. Based on transformed detection information respectively corresponding to each camera included in the camera group, the same predetermined type of objects located in different environmental images may be matched so as to obtain cross-image matching information corresponding to the camera group. Herein, the cross-image matching information may comprise a matching result for the same predetermined type of objects located in different environmental images.

In step 260: performing extrinsic parameter calibration on the plurality of cameras based on the cross-image matching information respectively corresponding to the at least one camera group.

In combination with the cross-image matching information corresponding to at least one camera group respectively, an accurate camera extrinsic parameter may be determined respectively for the N cameras by constructing a mathematical model, thereby achieving the extrinsic parameter calibration of the N cameras.

Based on the a multi-camera external reference calibration method provided in the above-mentioned embodiments of the present disclosure, multi-view image data (comprising multi-frame environmental images of different views) may be collected by a plurality of cameras arranged at different orientations of a movable device, and multiple transformed detection information under the same pre-set coordinate system may be obtained by the detection of the predetermined type of object on the multi-view image data and performing coordinate system transformation on the detection result. In addition, with reference to the spatial layout of the plurality of cameras, the plurality of cameras may be divided into at least one camera group. In combination with the use of a plurality of transformed detection information in a pre-set coordinate system, the same predetermined type of objects located in different environmental images may be matched, so that the obtained cross-image matching information is used for extrinsic parameter calibration of a plurality of cameras. Thus, in the embodiments of the present disclosure, by performing cross-image matching of information in a pre-set coordinate system with reference to information carried by multi-view image data during the movement of movable device, the extrinsic parameter calibration may be performed on a plurality of cameras automatically and reliably in real time, thereby ensuring the performance effect of tasks related to automatic driving.

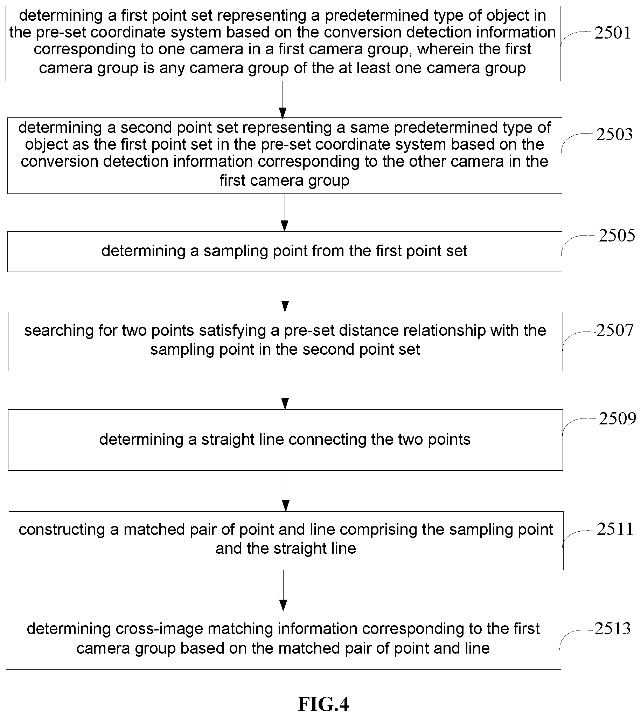

In some alternative examples, the number of cameras in each camera group is two. As shown in Fig. 4, the step 250 includes a step 2501, a step 2503, a step 2505, a step 2507, a step 2509, a step 2511, and a step 2513.

Step 2501: determining a first point set representing a predetermined type of object in the pre-set coordinate system based on the transformed detection information corresponding to one camera in a first camera group, wherein the first camera group is any camera group of the at least one camera group.

Step 2503: determining a second point set representing a same predetermined type of object as the first point set in the pre-set coordinate system based on the transformed detection information corresponding to another camera in the first camera group.

Assuming that the two cameras in the first camera group are a camera a and a camera b, respectively, and a lane line c exists in both an environmental image corresponding to the camera a and an environmental image corresponding to the camera b. The initial detection information corresponding to the camera a may comprise a lane line sampling result c1 corresponding to a lane line c in a pixel coordinate system corresponding to the camera a. The transformed detection information corresponding to the camera a may comprise a lane line sampling result c1' corresponding to the lane line c in the pre-set coordinate system. Similarly, the initial detection information corresponding to the camera b may comprise a lane line sampling result c2 corresponding to a lane line c in a pixel coordinate system corresponding to the camera b. The transformed detection information corresponding to the camera b may comprise a lane line sampling result c2' corresponding to the lane line c in the pre-set coordinate system.

Alternatively, the set of all points in the lane line sampling result c1' may serve as a first point set representing the lane line c in the pre-set coordinate system. The set of all points in the lane line sampling result c2' may serve as a second point set representing the lane line c in the pre-set coordinate system. Of course, it is also possible to sequentially connect all the points in the lane line sampling result c1' to form a first line and set all the points included in the first line as a first point set representing the lane line c in the pre-set coordinate system. Similarly, it is possible to sequentially connect all the points in the lane line sampling result c2' to form a second line and set all the points included in the second line as a second point set representing the lane line c in the pre-set coordinate system.

In step 2505, determining a sampling point from the first point set.

Alternatively, each point in the first point set may be taken as a sampling point. Alternatively, partial points may be screened from the first point set and each of the screened partial points is taken as a sampling point. Thus, the number of sampling points may be multiple, e.g., 10, 12, 15, etc. and will not be enumerated herein. Since the processing for each sampling point is similar, the following description mainly focuses on the processing for a single sampling point.

Step 2507: searching for two points satisfying a pre-set distance relationship with the sampling point in the second point set.

Optionally, the nearest neighbor matching algorithm may be used to search for two points nearest to the sampling point in the second point set. The two points obtained by searching may be used as two points satisfying a pre-set distance relationship with the sampling point. Here, the nearest neighbor matching algorithm may be implemented by a k-d tree, which is a data structure that partitions a k-dimensional data space.

Step 2509: determining a straight line connecting the two points.

Alternatively, the two points searched in step 2507 may be connected to obtain a corresponding straight line.

Step 2511: constructing a point-line matching pair comprising the sampling point and the straight line.

Assuming that the sampling point is denoted as p and the straight line is denoted as g, the point-line matching pair constructed in step 2511 may be denoted as (p, g), or as (g, p), or as p & g.

Step 2513: determining cross-image matching information corresponding to the first camera group based on the point-line matching pair.

With regard to each of the plurality of sampling points determined from the first point set, a point line matching degree may be obtained, and thus a plurality of point line matching degrees corresponding to the plurality of sampling points on a one-to-one basis may be obtained. The cross-image matching information corresponding to the first camera group may comprise a plurality of point line matching degrees corresponding to a plurality of sampling points on a one-to-one basis. Alternatively, in the case where the number of sampling points is too large, the cross-image matching information corresponding to the first camera group may comprise a partial point line matching degree among a plurality of point line matching degrees corresponding to a plurality of sampling points on a one-to-one basis.

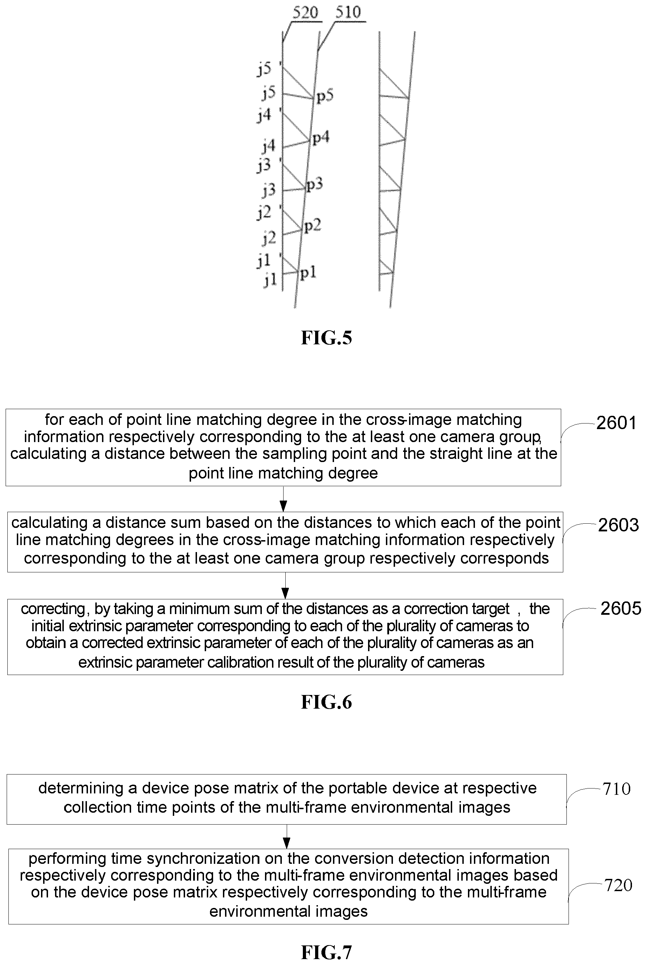

In an example, the first line may be as shown by a solid line 510 in Fig. 5. The second line may be as shown by a solid line 520 in Fig. 5. The solid line 510 may correspond to the first point set. The solid line 520 may correspond to the second point set. A sampling point p1, a sampling point p2, a sampling point p3, a sampling point p4 and a sampling point p5 may be determined from the first point set. Two points (a point j1 and a point j1') nearest to the sampling point p1, two points (a point j2 and a point j2') nearest to the sampling point p2, two points (point j3 and point j3') nearest to sampling point p3, two points (point j4 and point j4') nearest to sampling point p4, and two points (point j5 and point j5') nearest to sampling point p5 may be searched for from the second point set. Assuming that a straight line for connecting the point j1 and the point j1' is denoted as g1, a straight line for connecting the point j2 and the point j2' is denoted as g2, a straight line for connecting the point j3 and the point j3' is denoted as g3, a straight line for connecting the point j4 and the point j4' is denoted as g4, and a straight line for connecting the point j5 and the point j5' is denoted as g5, the following five point-line matching pairs may be constructed: (pl, gl), (p2, g2), (p3, g3), (p4, g4), and (p5, g5). The cross-image matching information corresponding to the first camera group may comprise these five point-line matching pairs.

In the embodiments of the present disclosure, with regard to two cameras included in each camera group, with reference to transformed detection information respectively corresponding to the two cameras, two point sets representing a same predetermined type of objects in a pre-set coordinate system may be determined efficiently and reliably. Herein, one point set may be used for obtaining a sampling point, and another point set may be used for obtaining two nearest neighbor points of the sampling point. By using the sampling point and the nearest neighbor points, the point-line matching pair may be constructed efficiently and reliably so as to use the point-line matching pair for determining cross-image matching information. Since the sampling point in the point-line matching pair are essentially obtained based on the environmental image corresponding to one of the two cameras, and the straight lines in the point-line matching pair are essentially obtained based on the environmental image corresponding to another of the two cameras, the cross-image matching information may effectively characterize the matching result of the same predetermined type of objects in the two frames of environmental images corresponding to the two cameras.

In some optional examples, the step 230 includes the steps below:

mapping the initial detection information respectively corresponding to the multi-frame environmental images to a pre-set coordinate system corresponding to the movable device by using respective initial extrinsic parameters of the plurality of cameras.

In general, when the image collection is performed by a camera, the relationship between a corresponding three-dimensional space point and an image pixel point may be expressed as the following formula (1):

$$Z * \begin{bmatrix} u \\ v \\ 1 \end{bmatrix} = K * [R \quad t] * \begin{bmatrix} x \\ y \\ z \\ 1 \end{bmatrix} \qquad (1)$$

wherein Z represents a normalization coefficient; (u, v) represents an image pixel point; K represents an extrinsic parameter of a camera; R represents a rotating part in an extrinsic parameter of the camera; t represents a translation part in the extrinsic parameter of the camera; and (x, y, z) represents a three-dimensional space point.

Since the case where the vehicle moves on the road surface is mainly considered in the embodiment of the present disclosure, it may be considered that z in (x, y, z) is 0. Thus, the above-mentioned formula (1) may be transformed into the following formula (2):

$$Z * \begin{bmatrix} u \\ v \\ 1 \end{bmatrix} = K * [R2 \quad t] * \begin{bmatrix} x \\ y \\ 1 \end{bmatrix} \qquad (2)$$

The shape of R in the above formula (1) may be 3 * 3, and R2 in the above formula (2) may include the first two columns of R in the above formula (1).

With reference to the above-mentioned introduction, it may be seen that the initial detection information corresponding to any environmental image may comprise several points. With regard to each point (which may be considered to belong to an image pixel point) in the initial detection information corresponding to the environmental image, the above-mentioned formula (2) may be used to transform the point to a VCS coordinate system so as to determine a corresponding three-dimensional space point, and thus several three-dimensional space points may be obtained. The transformed detection information corresponding to the environmental image may comprise these three-dimensional space points, where the coordinate value of each three-dimensional space point along the z-axis direction may be 0.

Each cross-image matching information comprises a plurality of point-line matching pairs. As shown in Fig. 6, the step 260 includes a step 2601, a step 2603, and a step 2605.

The step 2601: for each of point line matching degree in the cross-image matching information respectively corresponding to the at least one camera group, calculating a distance between the sampling point and the straight line at the point line matching degree.

For each point-line matching pair, the coordinates of the sampling point therein and the equation of the straight line therein may be considered to be known. On this basis, the distance between the sampling point and the straight line may be determined efficiently and reliably by geometric calculation.

Step 2603: calculating a distance sum based on the distances to which each of the point line matching degrees in the cross-image matching information respectively corresponding to the at least one camera group respectively corresponds.

Assuming that the number of the point line matching degrees in the cross-image matching information corresponding to each camera group is Q, since the number of camera groups is M, and a distance may be calculated using each point-line matching pair, M * Q distances may be obtained, and the distance sum may be obtained by summing the M * Q distances.

Of course, the manner of obtaining the distance sum is not limited to this. For example, if a small part of the M * Q distances has a larger value of the distance, which may be considered as abnormal data, then this part of the distance may be discarded, and only the distances in the M * Q distances that are not discarded may be summed to obtain the distance sum.

Step 2605: correcting, by taking a minimum sum of the distances as a correction target, the initial extrinsic parameter corresponding to each of the plurality of cameras to obtain a corrected extrinsic parameter of each of the plurality of cameras as an extrinsic parameter calibration result of the plurality of cameras.

Optionally, an initial extrinsic parameter of each of the N cameras may be taken as a variable needing to be optimized. A preset optimization algorithm is used to perform optimization processing with the minimum sum of the distances as a correction target so as to obtain a corrected extrinsic parameter of each of the plurality of cameras, where the preset optimization algorithm may be a linear optimization algorithm or a non-linear optimization algorithm. For example, the preset optimization algorithm may be a linear least square method or a non-linear least square method. In a case the pre-set optimization algorithm is a non-linear optimization algorithm, the minimization of the sum of distances may be achieved by a non-linear solver.

Since the mapping from the pixel coordinate system to the pre-set coordinate system needs to use the initial extrinsic parameters of the cameras, it may be considered that the initial extrinsic parameters affect the transformed detection information, and the transformed detection information will affect the cross-image matching information and thus affect the distance sum. Namely, the calculation of the distance sum needs to rely on the initial extrinsic parameters of each of the N cameras. In view of this, in the embodiments of the present disclosure, the correction of the initial extrinsic parameter required to calculate the sum of distances may be achieved by minimizing the sum of distances such that the distances between the same lane lines observed by the different cameras are minimized, thereby efficiently and reliably achieving extrinsic parameter calibration of the N cameras.

In some alternative examples, as shown in Fig. 7, embodiments of the present disclosure provide methods further comprising a step 710 and a step 720. Alternatively, the steps 710 and 720 may be performed prior to the step 250.

Step 710: determining a device pose matrix of the movable device at respective collection time points of the multi-frame environmental images.

Alternatively, the movable device may be provided with an odometer (e.g., an inertial odometer). From the odometer information acquired by the odometer, a device pose matrix of the movable device at respective collection time points of the N frames of the environmental images may be determined.

Alternatively, the movable device may be provided with an Inertial Measurement Unit (IMU). The device pose matrix of the movable device at the respective collection time points of the N frames of environmental images may be determined.

It should be noted that any device pose matrix referred to in the embodiments of the present disclosure may be used to describe the position and orientation of the VCS coordinate system in the world coordinate system. The constituent form of the device pose matrix may be referred to the above description of the matrix form of the camera extrinsic parameter and will not be described in detail herein.

Step 720: performing time synchronization on the transformed detection information respectively corresponding to the multi-frame environmental images based on the device pose matrix respectively corresponding to the multi-frame environmental images.

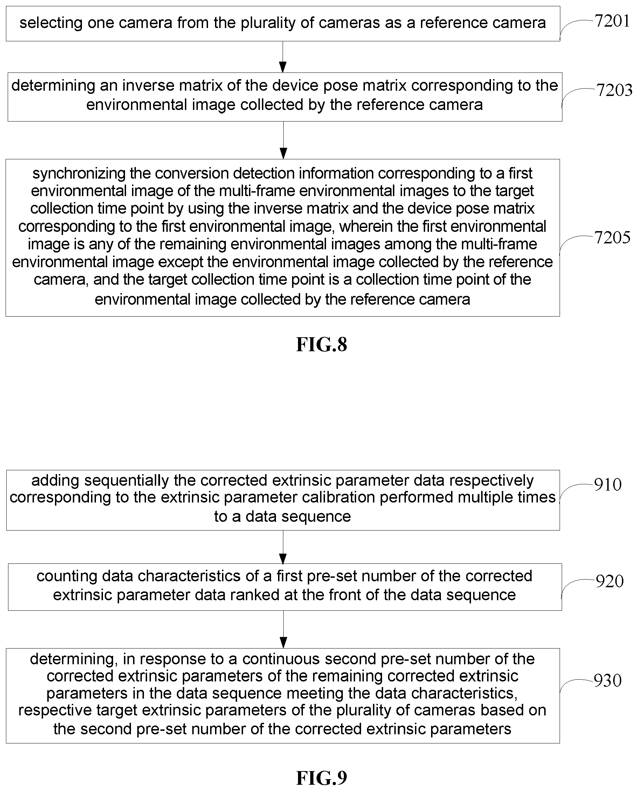

In some alternative embodiments of the present disclosure, the step 720, as shown in Fig. 8, includes steps 7201, 7203, and 7205.

Step 7201: selecting one camera from the plurality of cameras as a reference camera.

Optionally, one camera may be randomly selected from the N cameras as a reference camera. Alternatively, the camera having the best performance may be selected from among the N cameras as the reference camera.

Step 7203, determining an inverse matrix of the device pose matrix corresponding to the environmental image collected by the reference camera.

Alternatively, a corresponding inverse matrix may be obtained by performing a matrix inverse operation on a device pose matrix corresponding to environmental image acquired by a reference camera. Assuming that the device pose matrix corresponding to the environmental image acquired by the reference camera is expressed as $T_{wvb}$, the inverse matrix of the device pose matrix corresponding to the environmental image acquired by the reference camera may be expressed as $T_{wvb}^{-1}$.

Step 7205, synchronizing the transformed detection information corresponding to a first environmental image of the multi-frame environmental images to the target collection time point by using the inverse matrix and the device pose matrix corresponding to the first environmental image, wherein the first environmental image is any of the remaining environmental images among the multi-frame environmental image except the environmental image collected by the reference camera, and the target collection time point is a collection time point of the environmental image collected by the reference camera.

With reference to the above-mentioned introduction, it may be seen that the transformed detection information corresponding to any environmental image may comprise several points. It is assumed that the device pose matrix corresponding to the first environmental image is represented as $T_{wva}$. For each point in the transformed detection information corresponding to the first environmental image, if the coordinate of the point is represented as $X_{vb}$, then $X_{vb}$ may be synchronized to a target collection time point by using $T_{wvb}^{-1}$ and $T_{wva}$ so as to obtain $X_{va}$. The synchronization may be performed by using the following formula (3):

$$X_{vb} = T_{wvb}^{-1} * T_{wva} * X_{va} \quad (3)$$

The step 250 includes the followings below:

constructing, for each camera group of the at least one camera group, cross-image matching information of a predetermined type of object based on the time-synchronized transformed detection information respectively corresponding to each camera included in the camera group.

It should be noted that the manner in which cross-image matching information for a predetermined type of object is constructed based on the time-synchronized transformed detection information may be as described above with respect to the step 250 and will not be described further herein.

In this embodiment, by selecting a reference camera from N cameras, an collection time point of an environmental image acquired by the reference camera may be taken as a reference, and the transformed detection information corresponding to each of the remaining environmental images may be transformed to the collection time point, thereby a plurality of transformed detection information completely aligned in time may be obtained. The plurality of transformed detection information completely aligned in time may be used for the construction of cross-image matching information, which is beneficial to ensure the accuracy and reliability of the constructed cross-image matching information. Therefore, it may ensure the accuracy and reliability of the calibration results based on the cross-image matching information.

Of course, the embodiment of step 720 is not limited to this. For example, based on the device pose matrix corresponding to each of the N frames of environmental images, it is possible not to synchronize the transformed detection information corresponding to each of the N frames of environmental images to the target collection time point, but to other times different from the collection time point of any one of the N frames of the environmental image, only ensuring the time alignment of the plurality of transformed detection information, thereby effectively ensuring the accuracy and reliability of the extrinsic parameter calibration result.

In some alternative examples, the multi-frame environmental images constitute an image set; and extrinsic parameter calibration is performed multiple times, during each time the extrinsic parameter calibration corresponds to a different image set and the extrinsic parameter calibration is used for obtaining a corrected extrinsic parameter data comprising a corrected extrinsic parameter of each of the plurality of cameras.

For each image set, the steps 210 to 260 above may be performed using the N frames of environmental images in the image set to obtain an extrinsic parameter calibration result by performing one extrinsic parameter calibration, the extrinsic parameter calibration result comprising a corrected extrinsic parameter data. Assuming that the number of image sets is H, H corrected extrinsic parameters corresponding to H image sets on a one-to-one basis may be obtained by performing extrinsic calibration H-times.

As shown in Fig. 9, the embodiments of the present disclosure provide a method further comprising a step 910, a step 920, and a step 930. Alternatively, the steps 910, 920, and 930 may be performed after the step 260.

Step 910: adding sequentially the corrected extrinsic parameter data respectively corresponding to the extrinsic parameter calibration performed multiple times to a data sequence.

Alternatively, H times of extrinsic parameter calibration may be performed sequentially. After performing each time of extrinsic parameter calibration to obtain a corrected extrinsic parameter, the corrected extrinsic parameter may be added to the data sequence, so that the number of corrected extrinsic parameter included in the data sequence may gradually increase, and finally there may be H corrected extrinsic parameters in the data sequence. The H corrected extrinsic parameters may be arranged in the order of acquisition time from early to late.

Step 920: statistically analyzing data characteristics of a first pre-set number of the corrected extrinsic parameter data ranked at the front of the data sequence.

Alternatively, the first predetermined number may be 15, 20, 25 or some other value, and will not be enumerated here.

After obtaining a first pre-set number of corrected extrinsic parameter data by a first pre-set number of times extrinsic parameter calibrations in H times extrinsic parameter calibrations, it performs statistics on these corrected extrinsic parameter data to obtain mean value data, median data, variance data, standard deviation data, etc. thereby obtaining data characteristics including the mean value data, median data, variance data, standard deviation data, etc. Herein, the mean value data may comprise the mean value of each of the N cameras. The median data may include: the median value of each of the N cameras. The variance data may include the variance of each of the N cameras. The standard deviation data may include standard deviation for each of the N cameras.

Step 930: determining, in response to a continuous second pre-set number of the corrected extrinsic parameters of the remaining corrected extrinsic parameters in the data sequence meeting the data characteristics, respective target extrinsic parameters of the plurality of cameras based on the second pre-set number of the corrected extrinsic parameters.

Here, the remaining corrected extrinsic parameters in the data sequence may include: each corrected extrinsic parameter in the data sequence except the first predetermined number of corrected extrinsic parameters ordered at the front.

Alternatively, the second predetermined number may be 5, 10, 15 or some other value, which will not be enumerated here.

After the first pre-set number of times of extrinsic parameter calibration ends, with regard to each subsequent extrinsic parameter calibration, it may be determined whether the corrected extrinsic parameter data obtained by this extrinsic parameter calibration meet the data characteristics statistically analyzed in step 920. Thus, a continuous second pre-set number of corrected extrinsic parameter data meeting the data characteristics may be screened out. The continuous second pre-set number of corrected extrinsic parameter data may be used for determining the respective target extrinsic parameters of the N cameras.

Alternatively, for each of the N cameras, the average value of the second pre-set number of corrected extrinsic parameters corresponding to the camera in the continuous second pre-set number of corrected extrinsic parameters may be determined, and then the determined average value may be directly used as the target extrinsic parameter of the camera, or the correction result obtained by performing correction with some simple algorithms on the basis of the average value may be used as the target extrinsic parameter of the camera. Thus, a target extrinsic parameter of each of the N cameras may be obtained, which may be considered to be an accurate camera extrinsic parameter respectively determined for the N cameras.

In the embodiments of the present disclosure, data characteristics comprising mean value data, median data, variance data, standard deviation data, etc. may be obtained by performing statistics on a first pre-set number of corrected extrinsic parameter data corresponding to a first pre-set number of times of extrinsic parameter calibration on a one-to-one basis, and then the subsequent extrinsic parameter calibration may be performed. If, in the subsequent extrinsic parameter calibration, a continuous second pre-set number of corrected extrinsic parameter data all meet the data characteristics, the calibration convergence may be determined. At this moment, the second pre-set number of corrected extrinsic parameter data may be used for determining a target extrinsic parameter of each of the N cameras. Thus, the accuracy and reliability of the final multi-camera extrinsic parameter calibration results may be ensured.

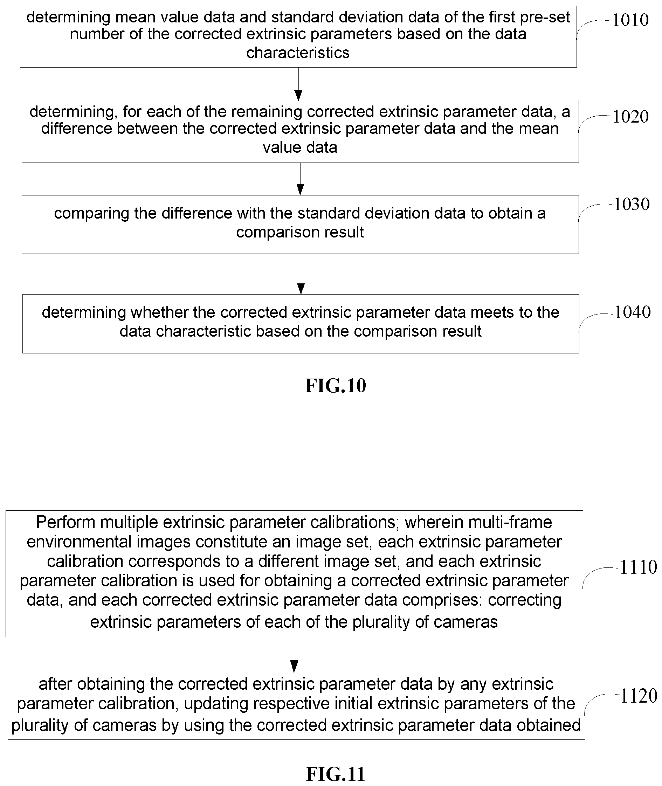

In some alternative examples, as shown in Fig. 10, embodiments of the present disclosure provide a method further comprising a step 1010, a step 1020, a step 1030, and step 1040.

Step 1010: determining mean value data and standard deviation data of the first pre-set number of the corrected extrinsic parameters based on the data characteristics.

Optionally, the data characteristics may include mean value data and standard deviation data of a first pre-set number of the corrected extrinsic parameter data. Thus, in step 1010, the mean value data and the variance data may be directly extracted from the data characteristics, wherein the mean value data may comprise the mean value of each of the N cameras; and the standard deviation data may include a standard deviation for each of the N cameras.

Step 1020: determining, for each of the remaining corrected extrinsic parameter data, a difference between the corrected extrinsic parameter data and the mean value data.

For each of the remaining corrected extrinsic parameter data, the corrected extrinsic parameter data may be compared with the mean value data to obtain a difference therebetween. Herein, the resulting differences may include a difference value corresponding to each of N cameras, and the difference corresponding to any camera may be obtained by differencing the corrected extrinsic parameter of the camera in the corrected extrinsic parameter data and the mean value corresponding to the camera.

Step 1030: comparing the difference with the standard deviation data to obtain a comparison result.

By comparing the difference with the standard deviation data, the comparison results of the two may be obtained. The obtained comparison result may comprise comparison information corresponding to each of the N cameras, and the comparison information corresponding to any camera may be used to characterize whether a difference value corresponding to the camera exceeds a standard deviation corresponding to the camera.

Step 1040: determining whether the corrected extrinsic parameter data meets to the data characteristic based on the comparison result.

Optionally, if the comparison result corresponding to each of the N cameras is used for characterizing that the difference value corresponding to the camera does not exceed the standard deviation corresponding to the camera, it may be determined that the corrected extrinsic parameter meets the data characteristic. If the comparison result for at least one of the N cameras is used to characterize that the difference value for that camera exceeds the standard deviation for that camera, it may be determined that the corrected extrinsic parameter data does not meet the data characteristic.

Of course, the manner of determining whether the corrected extrinsic parameter meets the data characteristic is not limited thereto. For example, if the comparison result corresponding to more than a certain proportion of the N cameras is used to characterize that the difference value corresponding to the camera does not exceed the standard deviation corresponding to the camera, it may be determined that the corrected extrinsic parameter meets the data characteristic.

In an embodiment of the present disclosure, the data characteristic may comprise mean value data and standard deviation data. It may determine whether the corrected extrinsic parameter data obtained by performing the extrinsic parameter calibration meets the standard deviation data efficiently and reliably by determining whether the floating condition of the corrected extrinsic parameter data with respect to the mean value data (which may be characterized by the difference determined in step 1020) meets the standard deviation data.

In some alternative examples, as shown in Fig. 11, embodiments of the present disclosure provide a method further comprising a step 1110 and a step 1120.

Step 1110: performing extrinsic parameter calibration multiple times; wherein the multi-frame environmental images constitute an image set; during each time the extrinsic parameter calibration corresponds to a different image set and the extrinsic parameter calibration is used for obtaining a corrected extrinsic parameter data comprising a corrected extrinsic parameter of each of the plurality of cameras.

For each image set, the steps 210 to 260 above may be performed using the N frames of environmental images in the image set to obtain an extrinsic parameter calibration result by performing extrinsic parameter calibration one time, the extrinsic parameter calibration result comprising a corrected extrinsic parameter data. Assuming that the number of image sets is H, H corrected extrinsic parameters corresponding to H image sets on a one-to-one basis may be obtained by performing extrinsic parameter calibration H-times.

Step 1120: after obtaining the corrected extrinsic parameter data by any extrinsic parameter calibration, updating respective initial extrinsic parameters of the plurality of cameras by using the corrected extrinsic parameter data obtained.

It should be noted that the initial extrinsic parameter of each of the N cameras used for the first extrinsic parameter calibration among the H extrinsic parameter calibrations may be given manually or calculated by some simple algorithms. After the corrected extrinsic parameter data is obtained by any one of the H times of extrinsic parameter calibration, for each camera of the N cameras, the initial extrinsic parameter of the camera may be replaced with the corrected extrinsic parameter of the camera in the corrected extrinsic parameter data obtained by this extrinsic parameter calibration. Thus, as the number of calibrations increases, the initial extrinsic parameters of each of the N cameras may be continuously updated, so that the initial extrinsic parameters used for each extrinsic parameter calibration are more reasonable and accurate, thereby ensuring the accuracy and reliability of the final multi-camera extrinsic parameter calibration result.

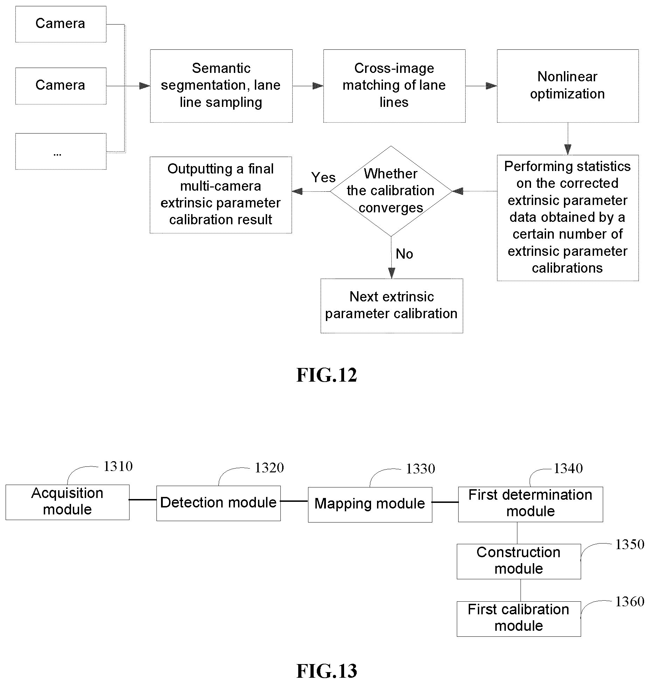

In some alternative examples, as shown in Fig. 12, a plurality of cameras may be provided on the movable device by which multi-view image data (which may include multi-frame environmental images of different views above) may be collected. The corresponding initial detection information may be obtained by performing semantic segmentation on each frame of environmental image and lane line sampling. By mapping each of the initial detection information to the VCS coordinate system according to the initial extrinsic parameters of the corresponding camera, and combining with the nearest neighbor matching algorithm, the point-line matching pair may be determined, and thus the cross-image matching of lane lines may be achieved. Then, according to all the determined point-line matching pairs, the initial extrinsic parameter of each camera may be used as an optimization variable by a non-linear optimization algorithm, and the sum of distances calculated based on all the point-line matching pairs may be minimized as a correction target to establish a non-linear optimization problem to solve the extrinsic parameter, so as to obtain the corrected extrinsic parameter of each camera.

Alternatively, the objective function of the nonlinear optimization problem may be expressed as:

$$\min \frac{1}{2} |f(rpy, T, X)|^2$$

Wherein rpy represents an extrinsic parameter of each of a plurality of cameras; T represents a device pose matrix corresponding to different environmental images (T may be used for performing time synchronization on the transformed detection information corresponding to each of a plurality of environmental images in the above); X represents a point-line matching degree obtained based on different environmental images; and f represents a process of calculating a distance sum based on all point-line matching pairs.

In addition, the corrected extrinsic parameter data obtained by extrinsic parameter calibration for a certain number of times (for example, a first pre-set number of times) may be statistically analyzed. The subsequent extrinsic parameter calibration may be performed. In the subsequent extrinsic parameter calibration, it may be determined whether the calibration converges with reference to the data characteristics obtained through statistics. If so, the final multi-camera extrinsic parameter calibration result may be output. If not, the next extrinsic parameter calibration may be performed until convergence.

In summary, in the embodiments of the present disclosure, the cross-image matching of information may be performed in a VCS coordinate system by referring to lane line-related information carried by multi-view image data. Then, the extrinsic parameter calibration may be performed on a plurality of cameras in an efficient and reliable real-time by using a non-linear optimization algorithm, so as to effectively ensure the performance effect of an automatic driving-related task.

The any of multi-camera extrinsic parameter calibration methods provided in embodiments of the present disclosure may be performed by any suitable device having data processing capabilities, including, but not limited to terminal equipment and servers, etc. Alternatively, any of the multi-camera extrinsic parameter calibration methods provided in the embodiments of the present disclosure may be executed by a processor, such as the processor executing any of the multi-camera extrinsic parameter calibration methods mentioned in the embodiments of the present disclosure by calling corresponding instructions stored in a memory. This will not be repeated below.

Exemplary device

Fig. 13 is a schematic structure diagram of a multi-camera extrinsic parameter calibration device provided in an exemplary embodiment of the present disclosure. The device shown in Fig. 13 includes an acquisition module 1310, a detection module 1320, a mapping module 1330, a first determination module 1340, a construction module 1350, and a first calibration module 1360.

The acquisition module 1310 is configured for acquiring multi-frame environmental images from different view angles collected by a plurality of cameras provided at different orientations of a movable device.

The detection module 1320 is configured for performing detection of a predetermined type of object respectively on the multi-frame environmental images acquired by the acquisition module 1310 to obtain initial detection information respectively corresponding to the multi-frame environmental images.

The mapping module 1330 is configured for mapping the initial detection information respectively corresponding to the multi-frame environmental images obtained by the detection module 1320 to a pre-set coordinate system corresponding to the movable device to obtain transformed detection information respectively corresponding to the multi-frame environmental images.

The first determination module 1340 is configured for dividing the plurality of cameras into at least one camera group based on the spatial layout of the plurality of cameras;

The construction module 1350 is configured for constructing, for each camera group of the at least one camera group determined by the first determination module 1340, cross-image matching information of a predetermined type of object based on the transformed detection information respectively corresponding to each camera included in the camera group obtained by the mapping module 1330.

The first calibration module 1360 is configured for performing extrinsic parameter calibration on the plurality of cameras based on the cross-image matching information respectively corresponding to the at least one camera group constructed by the construction module 1350.

In some alternative examples, the number of cameras in each camera group is two.

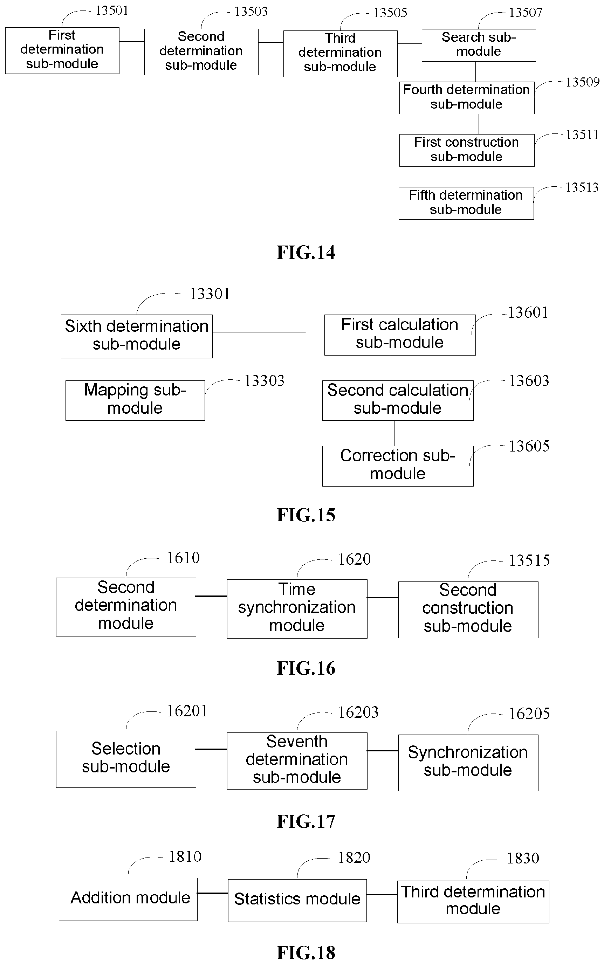

As shown in Fig. 14, the construction module 1350 includes:

a first determination sub-module 13501 configured for determining a first point set representing a predetermined type of object in a pre-set coordinate system based on transformed detection information corresponding to one camera in a first camera group obtained by a mapping module 1330, wherein the first camera group is any camera group of at least one camera group;

a second determination sub-module 13503 configured for determining a second point set representing a same predetermined type of object as the first point set in a pre-set coordinate system based on the transformed detection information corresponding to another camera in the first camera group obtained by the mapping module 1330;

a third determination sub-module 13505 configured for determining a sampling point from the first point set determined by the first determination sub-module 13501;

a search sub-module 13507 configured for searching for two points satisfying a pre-set distance relationship with the sampling point determined by the third determination sub-module 13505 in the second point set determined by the second determination sub-module 13503;

a fourth determination sub-module 13509 configured for determining a straight line for connecting the two points searched by the search sub-module 13507;

a first construction sub-module 13511 configured for constructing a point-line matching pair comprising a sampling point determined by a third determination sub-module 13505 and a straight line determined by a fourth determination sub-module 13509; and

a fifth determination sub-module 13513 configured for determining cross-image matching information corresponding to the first camera group based on the point-line matching pair constructed by the first construction sub-module 13511.

In some alternative examples, as shown in Fig. 15, the mapping module 1330 includes:

a sixth determination sub-module 13301 configured for determining an initial extrinsic parameter of each of the plurality of cameras; and

a mapping sub-module 13303 configured for mapping the initial detection information respectively corresponding to the multi-frame environmental images obtained by the detection module 1320 to a pre-set coordinate system corresponding to the movable device by using the respective initial extrinsic parameters of the plurality of cameras determined by the sixth determination sub-module 13301.

Each cross-image matching information comprises a plurality of point-line matching pairs. The first calibration module 1360 comprises:

a first calculation sub-module 13601 configured for calculating a distance between a sampling point and a straight line in the point-line matching degree for each point-line matching degree in the cross-image matching information respectively corresponding to the at least one camera group constructed by the construction module 1350;

a second calculation sub-module 13603 configured for calculating a distance sum based on distances to which each of the point line matching degrees in the cross-image matching information respectively corresponding to the at least one camera group respectively corresponds calculated by the first calculation sub-module 13601; and

a correction sub-module 13605 configured for correcting, by taking a minimum sum of the distances calculated by the second calculation sub-module 13603 as a correction target, the initial extrinsic parameter corresponding to each of the plurality of cameras determined by the sixth determination sub-module 13301 to obtain a corrected extrinsic parameter of each of the plurality of cameras as an extrinsic parameter calibration result of the plurality of cameras.

In some alternative examples, as shown in Fig. 16, embodiments of the present disclosure provide a device further comprising:

a second determination module 1610 configured for determining a device pose matrix of the movable device at respective collection time points of the multi-frame environmental images acquired by the acquisition module 1310 before the construction module 1350 constructs cross-image matching information of a predetermined type of object;

a time synchronization module 1620 configured for performing time synchronization on the transformed detection information respectively corresponding to the multi-frame environmental images acquired by the acquisition module 1310 based on the device pose matrix respectively corresponding to the multi-frame environmental images determined by the second determination module 1610;

a construction module 1350, including:
a second construction sub-module 13515 configured for constructing, for each of the at least one camera group, cross-image matching information of a predetermined type of object based on the time-synchronized transformed detection information respectively corresponding to each camera included in the camera group

In some alternative examples, as shown in Fig. 17, the time synchronization module 1620 includes:

a selection sub-module 16201 configured for selecting one camera from a plurality of cameras as a reference camera;

a seventh determination sub-module 16203 configured for determining an inverse matrix of a device pose matrix corresponding to the environmental image collected by the reference camera selected by the selection sub-module 16201;

a synchronization sub-module 16205 configured for synchronizing the transformed detection information corresponding to a first environmental image obtained by the mapping module 1330 to a target collection time point by using the inverse matrix determined by the seventh determination sub-module 16203 and the device pose matrix corresponding to the first environmental image determined by the second determination module 1610, wherein the first environmental image is any of the remaining environmental images in the multi-frame environmental image except the environmental image collected by the reference camera, and the target collection time point is a collection time point of the environmental image collected by the reference camera.

In some alternative examples, the multi-frame environmental images constitute an image set; and extrinsic parameter calibration is performed multiple times, during each time the extrinsic parameter calibration corresponds to a different image set and the extrinsic parameter calibration is used for obtaining a corrected extrinsic parameter data comprising a corrected extrinsic parameter of each of the plurality of camera.

As shown in Fig. 18, embodiments of the present disclosure provide a device further comprising:

an addition module 1810 configured for sequentially adding the corrected extrinsic parameter data respectively corresponding to the extrinsic parameter calibration performed multiple times by the first calibration module 1360 into a data sequence after the first calibration module 1360 performs extrinsic parameter calibration on the plurality of cameras;

a statistics module 1820 configured for statistically analyzing data characteristics of a first pre-set number of the corrected extrinsic parameter data ranked at the front of the data sequence; and

a third determination module 1830 configured for determining respective target extrinsic parameters of the plurality of cameras based on the second pre-set number of the corrected extrinsic parameters, in response to the continuous second pre-set number of the corrected extrinsic parameters in the remaining corrected extrinsic parameters in the data sequence meeting the data characteristics statistically obtained by the statistics module 1820.

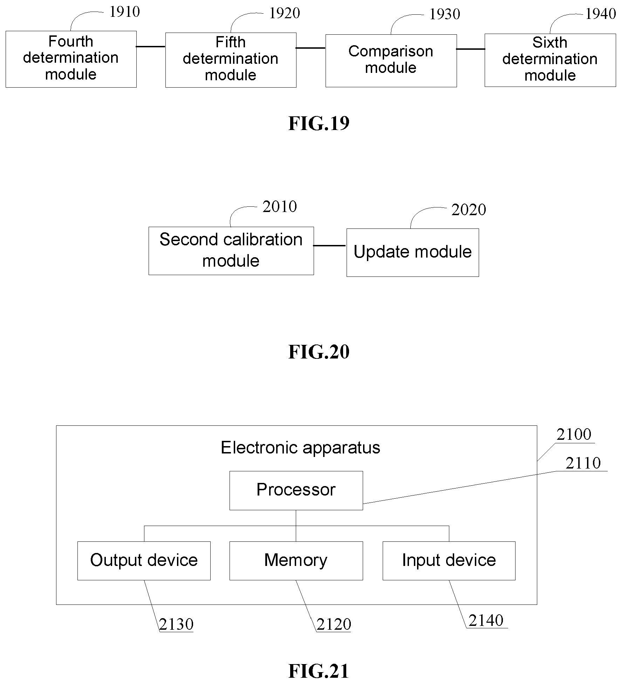

In some alternative examples, as shown in Fig. 19, embodiments of the present disclosure provide a device further comprising:

a fourth determination module 1910 configured for determining mean value data and standard deviation data of the first pre-set number of corrected extrinsic parameters based on the data characteristics statistically obtained by the statistics module 1820;

a fifth determination module 1920 configured for determining, for each of the remaining corrected extrinsic parameter data, a difference between the corrected extrinsic parameter data and the mean value data determined by the fourth determination module 1910;

a comparison module 1930 configured for comparing a difference determined by the fifth determination module 1920 with a standard deviation data determined by the fourth determination module 1910 to obtain a comparison result; and

a sixth determination module 1940 configured for determining, based on the comparison result obtained by the comparison module 1930, whether the corrected extrinsic parameter meets the data characteristics.

In some alternative examples, as shown in Fig. 20, embodiments of the present disclosure provide a device further comprising:

a second calibration module 2010 configured for performing extrinsic parameter calibration multiple times; wherein the multi-frame environmental images constitute an image set, during each time the extrinsic parameter calibration corresponds to a different image set and the extrinsic parameter calibration is used for obtaining a corrected extrinsic parameter data comprising a corrected extrinsic parameter of each of the plurality of cameras; and

an update module 2020 configured for, after obtaining the corrected extrinsic parameter data by any extrinsic parameter calibration performed by the second calibration module 2010, updating respective initial extrinsic parameters of the plurality of cameras by using the corrected extrinsic parameter data obtained by this extrinsic parameter calibration.

In the device of the present disclosure, various alternative embodiments, alternative embodiments and alternative examples disclosed above may be flexibly selected and combined as necessary to realize corresponding functions and effects, and the present disclosure is not intended to be exhaustive.

Advantageous technical effects corresponding to exemplary embodiments of the present device may be seen in the respective advantageous technical effects of the above method section described above and will not be described in detail here.

Exemplary electronic apparatus

Fig. 21 shows a block diagram of an electronic apparatus 2100 including one or more processors 2110 and a memory 2120 in accordance with an embodiment of the present disclosure.

The processor 2110 may be a central processing unit (CPU) or other form of processing unit having data processing capabilities and/or instruction execution capabilities, and may control other components in the electronic apparatus 2100 to perform desired functions.

The memory 2120 may include one or more computer program products, which may include various forms of computer-readable storage media, such as volatile memory and/or non-volatile memory. The volatile memory may for example comprise a random access memory (RAM) and/or a cache memory (cache) etc. The non-volatile memory may include, for example, a read only memory (ROM), a hard disk, a flash memory, etc. One or more computer program instructions may be stored on the computer-readable storage medium, and the processor 2110 may execute the or more computer program instructions to implement the methods of the various embodiments of the disclosure described above and/or other desired functions.

In one example, the electronic apparatus 2100 may further include an input device 2130 and an output device 2140 interconnected via a bus system and/or other forms of connection means (not shown).

The input device 2130 may comprise, for example, a keyboard, a mouse, etc.

The output device 2140 may output various information to the outside and include, for example, a display, speakers, a printer, a communications network and its connected remote output devices, etc.

Of course, for simplicity, only some of the components of the electronic apparatus 2100 relevant to the present disclosure are shown in Fig. 21, omitting components such as buses, input/output interfaces, etc. In addition, the electronic apparatus 2100 may include any other suitable components depending on the particular application.

Exemplary computer program product and computer-readable storage medium

In addition to the methods and apparatus described above, embodiments of the present disclosure may also provide a computer program product comprising computer program instructions that, when executed by a processor, cause a processor to perform the steps in the multi-camera extrinsic parameter calibration method of various embodiments of the present disclosure described in the "Exemplary methods" section above.

The computer program product may write program code for performing operations of embodiments of the present disclosure in any combination of one or more programming languages, including object-oriented programming languages, such as Java, C++, etc., and conventional procedural programming languages, such as the "C" language or similar programming languages. The program code may be executed entirely on the user computing device, partly on the user computing device, as a stand-alone package, partly on the user computing device, partly on the remote computing device, or entirely on the remote computing device or server.

Furthermore, embodiments of the present disclosure may also provide a computer-readable storage medium storing a computer program thereon which, when executed by a processor, causes the processor to perform steps in the multi-camera extrinsic parameter calibration method in various embodiments of the present disclosure as described in the "Exemplary methods" section described above, in addition to the methods and instruments described above.

The computer-readable storage medium may take any combination of one or more readable media. The readable medium may be a readable signal medium or a readable storage medium. The readable storage medium may include, for example but not limited to, an electronic, magnetic, optical, electromagnetic, infrared, or semiconductor system, an apparatus, or a device, or any combination thereof. More specific examples (a non-exhaustive list) of readable storage media include an electrical connection having one or more wires, a portable disk, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the above.

The general principles of the present disclosure have been described above in connection with specific embodiments. However, the advantages, advantages, effects, etc. mentioned in the present disclosure are merely exemplary and not limiting, and should not be construed as being required by the various embodiments of the present disclosure. The particular details disclosed above are for purposes of illustration and description only and are not intended to be limiting, as the disclosure is not limited to the particular details disclosed above.

Those skilled in the art may make various modifications and variations in the present disclosure without departing from the spirit or scope of the present disclosure. Thus, it is intended that the present invention cover the modifications and variations of this application provided they fall into the scope of the appended claims and their equivalents.

**Claims**

1.   A multi-camera extrinsic parameter calibration method, comprising:

    acquiring multi-frame environmental images from different view angles collected by a plurality of cameras provided at different orientations of a movable device;
    performing detection of a predetermined type of object respectively on the multi-frame environmental images to obtain initial detection information respectively corresponding to the multi-frame environmental images;
    mapping the initial detection information respectively corresponding to the multi-frame environmental images to a pre-set coordinate system corresponding to the movable device to obtain transformed detection information respectively corresponding to the multi-frame environmental images;
    dividing the plurality of cameras into at least one camera group based on the spatial layout of the plurality of cameras;
    constructing, for each camera group of the at least one camera group, cross-image matching information of a predetermined type of object based on the transformed detection information respectively corresponding to each camera included in the camera group; and
    performing extrinsic parameter calibration on the plurality of cameras based on the cross-image matching information respectively corresponding to the at least one camera group.

2. The method according to claim 1, wherein the number of cameras in each camera group is two; and
the constructing, for each camera group of the at least one camera group, cross-image matching information of a predetermined type of object based on the transformed detection information respectively corresponding to each camera included in the camera group comprises:

   determining a first point set representing a predetermined type of object in the pre-set coordinate system based on the transformed detection information corresponding to one camera in a first camera group, wherein the first camera group is any camera group of the at least one camera group;
   determining a second point set representing a same predetermined type of object as the first point set in the pre-set coordinate system based on the transformed detection information corresponding to another camera in the first camera group;
   determining a sampling point from the first point set;
   searching for two points satisfying a pre-set distance relationship with the sampling point in the second point set;
   determining a straight line connecting the two points;
   constructing a point-line matching pair comprising the sampling point and the straight line; and
   determining cross-image matching information corresponding to the first camera group based on the point-line matching pair.

3. The method according to claim 2, wherein
the mapping the initial detection information respectively corresponding to the multi-frame environmental images to a pre-set coordinate system corresponding to the movable device comprises:

   mapping the initial detection information respectively corresponding to the multi-frame environmental images to a pre-set coordinate system corresponding to the movable device by using respective initial extrinsic parameters of the plurality of cameras;
   wherein each of the cross-image matching information comprises a plurality of the point-line matching pair, and the performing extrinsic parameter calibration on the plurality of cameras based on the cross-image matching information respectively corresponding to the at least one camera group comprises:

      for each of point line matching degree in the cross-image matching information respectively corresponding to the at least one camera group, calculating a distance between the sampling point and the straight line at the point line matching degree;
      calculating a distance sum based on the distances to which each of the point line matching degrees in the cross-image matching information respectively corresponding to the at least one camera group respectively corresponds; and
      correcting, by taking a minimum sum of the distances as a correction target, the initial extrinsic parameter corresponding to each of the plurality of cameras to obtain a corrected extrinsic parameter of each of the plurality of cameras as an extrinsic parameter calibration result of the plurality of cameras.

4. The method according to claim 1, wherein before the constructing, for each camera group of the at least one camera group, cross-image matching information of a predetermined type of object based on the transformed detection information respectively corresponding to each camera included in the camera group, the method further comprises:

   determining a device pose matrix of the movable device at respective collection time points of the multi-frame environmental images; and
   performing time synchronization on the transformed detection information respectively corresponding to the multi-frame environmental images based on the device pose matrix respectively corresponding to the multi-frame environmental images, and
   wherein the constructing, for each camera group of the at least one camera group, cross-image matching information of a predetermined type of object based on the transformed detection information respectively corresponding to each camera included in the camera group comprises:
   constructing, for each camera group of the at least one camera group, cross-image matching information of a predetermined type of object based on the time-synchronized transformed detection information respectively corresponding to each camera included in the camera group.

5. The method according to claim 4, wherein the performing time synchronization on the transformed detection information respectively corresponding to the multi-frame environmental images based on the device pose matrix respectively corresponding to the multi-frame environmental images comprises:

selecting one camera from the plurality of cameras as a reference camera;
determining an inverse matrix of the device pose matrix corresponding to the environmental image collected by the reference camera; and
synchronizing the transformed detection information corresponding to a first environmental image of the multi-frame environmental images to the target collection time point by using the inverse matrix and the device pose matrix corresponding to the first environmental image, wherein the first environmental image is any one of the remaining environmental images among the multi-frame environmental images except the environmental image collected by the reference camera, and the target collection time point is a collection time point of the environmental image collected by the reference camera.

6. The method according to claim 1, wherein the multi-frame environmental images constitute an image set; and extrinsic parameter calibration is performed multiple times, during each time the extrinsic parameter calibration corresponds to a different image set and the extrinsic parameter calibration is used for obtaining a corrected extrinsic parameter data comprising a corrected extrinsic parameter of each of the plurality of cameras;
after the performing extrinsic parameter calibration on the plurality of cameras based on the cross-image matching information respectively corresponding to the at least one camera group, the method further comprises:

adding sequentially the corrected extrinsic parameter data respectively corresponding to the extrinsic parameter calibration performed multiple times to a data sequence;
statistically analyzing data characteristics of a first pre-set number of the corrected extrinsic parameter data ranked at the front of the data sequence;
determining, in response to a continuous second pre-set number of the corrected extrinsic parameters of the remaining corrected extrinsic parameters in the data sequence meeting the data characteristics, respective target extrinsic parameters of the plurality of cameras based on the second pre-set number of the corrected extrinsic parameters.

7. The method according to claim 6, further comprising:

determining mean value data and standard deviation data of the first pre-set number of the corrected extrinsic parameters based on the data characteristics;
determining, for each of the remaining corrected extrinsic parameter data, a difference between the corrected extrinsic parameter data and the mean value data;
comparing the difference with the standard deviation data to obtain a comparison result; and
determining whether the corrected extrinsic parameter data meets to the data characteristic based on the comparison result.

8. The method according to claim 6, further comprising:
after obtaining the corrected extrinsic parameter data by any extrinsic parameter calibration, updating respective initial extrinsic parameters of the plurality of cameras by using the corrected extrinsic parameter data obtained.

9. The method according to any one of claims 1-8, wherein the pre-set coordinate system is a vehicle coordinate system.

10. A multi-camera extrinsic parameter calibration device, comprising:

an acquisition module (1310) configured for acquiring multi-frame environmental images from different view angles collected by a plurality of cameras provided at different orientations of a movable device;
a detection module (1320) configured for performing detection of a predetermined type of object respectively on the multi-frame environmental images acquired by the acquisition module (1310) to obtain initial detection information respectively corresponding to the multi-frame environmental images;
a mapping module (1330) configured for mapping the initial detection information respectively corresponding to the multi-frame environmental images obtained by the detection module (1320) to a pre-set coordinate system corresponding to the movable device to obtain transformed detection information respectively corresponding to the multi-frame environmental images;
a first determination module (1340) configured for dividing the plurality of cameras into at least one camera group based on the spatial layout of the plurality of cameras;

a construction module (1350) configured for constructing, for each camera group of the at least one camera group determined by the first determination module (1340), cross-image matching information of a predetermined type of object based on the transformed detection information respectively corresponding to each camera included in the camera group obtained by the mapping module (1330); and

a first calibration module (1360) configured for performing extrinsic parameter calibration on the plurality of cameras based on the cross-image matching information respectively corresponding to the at least one camera group constructed by the construction module (1350).

11. The multi-camera extrinsic parameter calibration device according to claim 10, wherein the number of cameras in each camera group is two; and
wherein the construction module (1350) comprises:

a first determination sub-module (13501), configured for determining a first point set representing a predetermined type of object in the pre-set coordinate system based on the transformed detection information corresponding to one camera in a first camera group obtained by the mapping module (1330), wherein the first camera group is any camera group of the at least one camera group;

a second determination sub-module (13503), configured for determining a second point set representing a same predetermined type of object as the first point set in the pre-set coordinate system based on the transformed detection information corresponding to another camera in the first camera group from the mapping module (1330);

a third determination sub-module (13505), configured for determining a sampling point from the first point set determined by the first determination sub-module (13501);

a search sub-module (13507), configured for searching for two points satisfying a pre-set distance relationship with the sampling point determined by the third determination sub-module (13505) in the second point set determined by the second determination sub-module (13503);

a fourth determination sub-module (13509), configured for determining a straight line connecting the two points searched by the search sub-module (13507);

a first construction sub-module (13511), configured for constructing a point-line matching pair comprising the sampling point determined by a third determination sub-module (13505) and the straight line determined by a fourth determination sub-module (13509); and

a fifth determination sub-module (13513), configured for determining cross-image matching information corresponding to the first camera group based on the point-line matching pair constructed by the first construction sub-module (13511).

12. The multi-camera extrinsic parameter calibration device according to claim 11, wherein the mapping module (1330) comprises:

a sixth determination sub-module (13301) configured for determining an initial extrinsic parameter of each of the plurality of cameras;

a mapping sub-module (13303) configured for mapping the initial detection information respectively corresponding to the multi-frame environmental images obtained by the detection module (1320) to a pre-set coordinate system corresponding to the movable device by using respective initial extrinsic parameters of the plurality of cameras determined by the sixth determination sub-module (13301); and

wherein each of the cross-image matching information comprises a plurality of the point-line matching pair, and the first calibration module (1360) comprises:

a first calculation sub-module (13601) configured for calculating a distance between the sampling point and the straight line at the point line matching degree for each of point line matching degree in the cross-image matching information respectively corresponding to the at least one camera group constructed by the construction module (1350);

a second calculation sub-module (13603) configured for calculating a distance sum based on the distances to which each of the point line matching degrees in the cross-image matching information respectively corresponding to the at least one camera group respectively corresponds calculated by the first calculation sub-module (13601); and

a correction sub-module (13605) configured for correcting, by taking a minimum sum of the distances calculated by the second calculation sub-module (13603) as a correction target, the initial extrinsic parameter corresponding to each of the plurality of cameras determined by the sixth determination sub-module (13301) to obtain a corrected extrinsic parameter of each of the plurality of cameras as an extrinsic parameter calibration result of the plurality of cameras.

13. The multi-camera extrinsic parameter calibration device according to claim 10, wherein the device further comprises:

a second determination module (1610) configured for determining a device pose matrix of the movable device at respective collection time points of the multi-frame environmental images acquired by the acquisition module (1310) before the construction module (1350) constructs cross-image matching information of a predetermined type of object; and

a time synchronization module (1620) configured for performing time synchronization on the transformed detection information respectively corresponding to the multi-frame environmental images acquired by the acquisition module (1310) based on the device pose matrix respectively corresponding to the multi-frame environmental images determined by the second determination module (1610), and

wherein the construction module (1350) further comprises:

a second construction sub-module (13515) configured for constructing, for each camera group of the at least one camera group, cross-image matching information of a predetermined type of object based on the time-synchronized transformed detection information respectively corresponding to each camera included in the camera group.

14. A non-transient computer-readable storage medium storing a computer program thereon which, when executed by a processor, is used for executing the multi-camera extrinsic parameter calibration method according to any one of the claims 1-9.

15. An electronic apparatus (2100), comprising:

a processor (2110); and

a memory (2120) configured for storing processor-executable instructions;

wherein the processor (2110) is configured for reading the executable instructions from the memory (2120), and executing the instructions to implement the multi-camera extrinsic parameter calibration method according to any one of the claims 1-9.

FIG.1

acquiring multi-frame environmental images collected by a plurality of cameras provided at different orientations of a portable device from different view angles — 210

performing detection of a predetermined type of object respectively on the multi-frame environmental images to obtain initial detection information respectively corresponding to the multi-frame environmental images — 220

mapping the initial detection information respectively corresponding to the multi-frame environmental images to a pre-set coordinate system corresponding to the portable device to obtain conversion detection information respectively corresponding to the multi-frame environmental images — 230

dividing the plurality of cameras into at least one camera group based on the spatial layout of the plurality of cameras — 240

constructing, for each camera group of the at least one camera group, cross-image matching information about a predetermined type of object based on the conversion detection information respectively corresponding to each camera included in the camera group — 250

performing extrinsic parameter calibration on the plurality of cameras based on the cross-image matching information respectively corresponding to the at least one camera group — 260

FIG.2

310

320

**FIG.3**

determining a first point set representing a predetermined type of object in the pre-set coordinate system based on the conversion detection information corresponding to one camera in a first camera group, wherein the first camera group is any camera group of the at least one camera group ⟋—2501

↓

determining a second point set representing a same predetermined type of object as the first point set in the pre-set coordinate system based on the conversion detection information corresponding to the other camera in the first camera group ⟋—2503

↓

determining a sampling point from the first point set ⟋—2505

↓

searching for two points satisfying a pre-set distance relationship with the sampling point in the second point set ⟋—2507

↓

determining a straight line connecting the two points ⟋—2509

↓

constructing a matched pair of point and line comprising the sampling point and the straight line ⟋—2511

↓

determining cross-image matching information corresponding to the first camera group based on the matched pair of point and line ⟋—2513

FIG.4

**FIG.5**

| for each of point line matching degree in the cross-image matching information respectively corresponding to the at least one camera group, calculating a distance between the sampling point and the straight line at the point line matching degree | 2601 |
|---|---|

| calculating a distance sum based on the distances to which each of the point line matching degrees in the cross-image matching information respectively corresponding to the at least one camera group respectively corresponds | 2603 |

| correcting, by taking a minimum sum of the distances as a correction target , the initial extrinsic parameter corresponding to each of the plurality of cameras to obtain a corrected extrinsic parameter of each of the plurality of cameras as an extrinsic parameter calibration result of the plurality of cameras | 2605 |

**FIG.6**

| determining a device pose matrix of the portable device at respective collection time points of the multi-frame environmental images | 710 |
|---|---|

| performing time synchronization on the conversion detection information respectively corresponding to the multi-frame environmental images based on the device pose matrix respectively corresponding to the multi-frame environmental images | 720 |

**FIG.7**

selecting one camera from the plurality of cameras as a reference camera — 7201

determining an inverse matrix of the device pose matrix corresponding to the environmental image collected by the reference camera — 7203

synchronizing the conversion detection information corresponding to a first environmental image of the multi-frame environmental images to the target collection time point by using the inverse matrix and the device pose matrix corresponding to the first environmental image, wherein the first environmental image is any of the remaining environmental images among the multi-frame environmental image except the environmental image collected by the reference camera, and the target collection time point is a collection time point of the environmental image collected by the reference camera — 7205

**FIG.8**

adding sequentially the corrected extrinsic parameter data respectively corresponding to the extrinsic parameter calibration performed multiple times to a data sequence — 910

counting data characteristics of a first pre-set number of the corrected extrinsic parameter data ranked at the front of the data sequence — 920

determining, in response to a continuous second pre-set number of the corrected extrinsic parameters of the remaining corrected extrinsic parameters in the data sequence meeting the data characteristics, respective target extrinsic parameters of the plurality of cameras based on the second pre-set number of the corrected extrinsic parameters — 930

**FIG.9**

determining mean value data and standard deviation data of the first pre-set number of the corrected extrinsic parameters based on the data characteristics — 1010

↓

determining, for each of the remaining corrected extrinsic parameter data, a difference between the corrected extrinsic parameter data and the mean value data — 1020

↓

comparing the difference with the standard deviation data to obtain a comparison result — 1030

↓

determining whether the corrected extrinsic parameter data meets to the data characteristic based on the comparison result — 1040

**FIG.10**

Perform multiple extrinsic parameter calibrations; wherein multi-frame environmental images constitute an image set, each extrinsic parameter calibration corresponds to a different image set, and each extrinsic parameter calibration is used for obtaining a corrected extrinsic parameter data, and each corrected extrinsic parameter data comprises: correcting extrinsic parameters of each of the plurality of cameras — 1110

↓

after obtaining the corrected extrinsic parameter data by any extrinsic parameter calibration, updating respective initial extrinsic parameters of the plurality of cameras by using the corrected extrinsic parameter data obtained — 1120

**FIG.11**

Camera

Camera

...

Semantic segmentation, lane line sampling → Cross-image matching of lane lines → Nonlinear optimization

Outputting a final multi-camera extrinsic parameter calibration result ← Yes — Whether the calibration converges ← Performing statistics on the corrected extrinsic parameter data obtained by a certain number of extrinsic parameter calibrations

No

Next extrinsic parameter calibration

**FIG.12**

1310 Acquisition module — 1320 Detection module — 1330 Mapping module — 1340 First determination module

1350 Construction module

1360 First calibration module

**FIG.13**

First
determination
sub-module — 13501

Second
determination
sub-module — 13503

Third
determination
sub-module — 13505

Search sub-
module — 13507

Fourth determination
sub-module — 13509

First construction
sub-module — 13511

Fifth determination
sub-module — 13513

**FIG.14**

Sixth determination
sub-module — 13301

Mapping sub-
module — 13303

First calculation
sub-module — 13601

Second calculation
sub-module — 13603

Correction sub-
module — 13605

**FIG.15**

Second
determination
module — 1610

Time
synchronization
module — 1620

Second
construction
sub-module — 13515

**FIG.16**

Selection
sub-module — 16201

Seventh
determination
sub-module — 16203

Synchronization
sub-module — 16205

**FIG.17**

Addition module — 1810

Statistics module — 1820

Third determination
module — 1830

**FIG.18**

1910  1920  1930  1940

| Fourth determination module | Fifth determination module | Comparison module | Sixth determination module |

**FIG.19**

2010  2020

| Second calibration module | Update module |

**FIG.20**

Electronic apparatus 2100
2110

Processor

Output device | Memory | Input device

2130  2120  2140

**FIG.21**

| | Europäisches Patentamt European Patent Office Office européen des brevets | **EUROPEAN SEARCH REPORT** | **Application Number** EP 24 19 2329 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 082 573 A (XIAOMI AUTOMOBILE TECHNOLOGY CO LTD) 20 September 2022 (2022-09-20) | 1,6-10, 14,15 | INV. G06T7/80 |
| Y | * abstract * * figures 1-7 * * paragraph [0067] - paragraph [0108] * ----- | 2-5, 11-13 | |
| Y | CN 112 529 966 A (HAOWEI TECH WUHAN CO LTD) 19 March 2021 (2021-03-19) | 2,3,11, 12 | |
| A | * abstract * * figures 1-3 * * paragraph [0043] - paragraph [0078] * ----- | 1,4-10, 13-15 | |
| Y | US 2022/227380 A1 (GRIFFITH SHANE DAVID [US] ET AL) 21 July 2022 (2022-07-21) | 4,5,13 | |
| A | * abstract * * figures 1-6 * * paragraph [0014] - paragraph [0040] * ----- | 1-3, 6-12,14, 15 | |

| | | | TECHNICAL FIELDS SEARCHED (IPC) |
|---|---|---|---|
| | | | G06T |

The present search report has been drawn up for all claims

| Place of search | Date of completion of the search | Examiner |
|---|---|---|
| Munich | 19 December 2024 | Tessens, Linda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 502 951 A1

## ANNEX TO THE EUROPEAN SEARCH REPORT
## ON EUROPEAN PATENT APPLICATION NO.

EP 24 19 2329

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2024

| Patent document cited in search report | | Publication date | Patent family member(s) | | Publication date |
|---|---|---|---|---|---|
| CN 115082573 | A | 20-09-2022 | NONE | | |
| CN 112529966 | A | 19-03-2021 | NONE | | |
| US 2022227380 | A1 | 21-07-2022 | CN | 114764138 A | 19-07-2022 |
| | | | US | 2022227380 A1 | 21-07-2022 |
| | | | US | 2023356734 A1 | 09-11-2023 |

EPO FORM P0459

For more details about this annex : see Official Journal of the European Patent Office, No. 12/82